# EUROPEAN PATENT APPLICATION

(11) **EP 3 572 909 A1**
(43) Date of publication of application: **27.11.2019**
(21) Application number: 18174260.2
(22) Date of filing: 25.05.2018
(51) Int. Cl.: G06F 1/32, G06F 9/50

(54) **METHOD AND APPARATUS OF REDUCING ENERGY CONSUMPTION IN A NETWORK**

(71) Applicant: Nokia Solutions and Networks Oy, 02610 Espoo (FI)
(72) Inventor: Arjona Aroca, Jordi, Dublin, D2 (IE); Lugones, Diego, Dublin, D7 (IE); Omana Iglesias, Jesus, Dublin, D15 (IE)
(74) Representative: Louis Pöhlau Lohrentz

(57) **Abstract**

The present invention discloses a method of reducing energy consumption in a network of processing units operable at discrete operation frequencies, wherein each processing unit achieves a peak energy efficiency when being operated at a target operation frequency to process a workload rate, wherein each processing unit has a higher energy efficiency when it is operated at its target operation frequency to process a workload rate within its target subrange of workload rate than when it is operated at its other operation frequency to process that workload rate; the network being configured to run an application; the method comprising: configuring a number of active processing units running the application to operate at their respective target operation frequency; distributing a workload corresponding to the application among the number of active processing units in such a way that the workload rate of each active processing unit is within its target subrange.

## Description

### Field of the invention

Various example embodiments relate to a method and apparatus of reducing energy consumption in a network.

### Background

Datacenters are one of the key drivers for the success of Cloud computing. Cloud computing allows companies and organizations to outsource their computing requirements to the Cloud and allowing them to acquire these resources on demand. Datacenters are purpose-built facilities composed of thousands of servers, providing storage and computing services within and across organizational boundaries. However, one of the main drawbacks of datacenters is their high and increasing energy consumption.

Given their large footprint, the main power consumers in datacenters are the computing resources in servers, e.g. CPU cores, memory, HD, network I/O, etc. They account for 50% of the total consumption. Power consumption of servers can be divided in two parts, 1) the baseline consumption, namely the power paid for being powered on but idle, and 2) the dynamic consumption, which depends on the workload rate being processed by the server. The baseline consumption can only be reduced by powering down the server or moving it to a low power consumption state. However, the dynamic consumption can be reduced by adapting the CPU frequency of operation to the current workload rate. This may imply reducing the speed of the cores in the CPU and therefore their performance.

Due to the ever-increasing number of datacenters and of servers within them, reducing the power bill and the CO₂ footprint of datacentres has become one of the main concerns for operators. For this reason, energy efficiency has grown to be a desirable feature for cloud management software. However, energy efficiency must be achieved while ensuring that performance goals are met, since many cloud applications are subject to Service Level Objectives (SLO).

An objective of the invention is to reduce the power consumption of the datacentes without scarifying performance of the application.

### Summary of the Invention

The object of the invention is achieved by the method and apparatus according to the claims.

According to one aspect of the present invention, there is provided a method of reducing energy consumption in a network of processing units, among which a plurality of processing units are operable at discrete operation frequencies, wherein the respective processing unit achieves a peak energy efficiency when being operated at a target operation frequency to process a certain workload rate, the target operation frequency corresponding to a target subrange of workload rate, wherein the respective processing unit has a higher energy efficiency when it is operated at its respective target operation frequency to process a workload rate within its respective target subrange of workload rate than when it is operated at its other operation frequency (frequencies) to process a workload rate within its respective target subrange of workload rate; the network being configured to run an application; the method comprising: configuring a number of active processing units running the application to operate at their respective target operation frequency; distributing a workload corresponding to the application among the number of active processing units in such a way that the workload rate of the respective active processing unit is within its target subrange.

In an embodiment, the method further comprises: obtaining a workload rate for respective ones of the number of active processing units; adjusting the number of active processing units based on the workload rate and the target subrange of workload rate of the respective active processing units, so that the workload rate of respective ones of the number of active processing units is within the target subrange of workload rate of the respective active processing units.

In an embodiment, the method further comprises: determining for the respective processing unit the target operation frequency and the target subrange of workload rate corresponding to the target operation frequency.

In an embodiment, the application is associated with a performance goal, and the method further comprises: determining a workload rate demand of the application on the basis of the performance goal, determining the number of active processing units based on the workload rate demand and the target subrange of workload rate of the respective processing units; running the application on the number of active processing units.

In an embodiment, the application is associated with a performance goal, and the method further comprises: obtaining a performance metrics of the application and determining whether the performance goal is achieved based on the performance metrics; configuring, when the performance goal is not achieved, the respective active processing unit to operate at a respective subsequent operation frequency in such a way that the performance goal is achieved, wherein the subsequent operation frequency of the respective active processing unit is an operation frequency which is higher or lower than the target operation frequency selectable from the possible operation frequencies of the respective active processing unit.

In an embodiment, the step of adjusting the number of active processing units further comprises: activating new processing unit(s) for the application; or deactivating a number of processing unit running the application.

In an embodiment, in case it is not possible to activate new processing unit(s), the method further comprises: configuring the respective active processing unit to operate at another operation frequency, wherein the active processing unit achieves a highest energy efficiency when being operated at the other operation frequency to process a workload rate conforming to the workload corresponding to the application.

In an embodiment, the processing unit is any one of: a core; a processor comprising one or more cores; or a virtual instance.

According to another aspect of the present invention, there is provided a network controller in a network, the network controller being communicatively connected to a plurality of processing units comprised in the network, among which a plurality of processing units are operable at discrete operation frequencies,
wherein the respective processing unit achieves a peak energy efficiency when being operated at a target operation frequency to process a certain workload rate, the target operation frequency corresponding to a target subrange of workload rate, wherein the respective processing unit has a higher energy efficiency when it is operated at its respective target operation frequency to process a workload rate within its respective target subrange of workload rate than when it is operated at its other operation frequency (frequencies) to process a workload rate within its respective target subrange of workload rate; the network being configured to run an application; the network controller comprising: an operation frequency configuring module, for configuring a number of active processing units running the application to operate at their respective target operation frequency; a workload distributing module, for distributing a workload corresponding to the application among the number of active processing units in such a way that the workload rate of the respective active processing unit is within its target subrange.

In an embodiment, the network controller further comprises: a workload rate obtaining module, for obtaining a workload rate for respective ones of the number of active processing units; an active processing units adjusting unit, communicatively connected to the workload rate obtaining module, for adjusting the number of active processing units based on the workload rate and the target subrange of workload rate of the respective active processing units, so that the workload rate of respective ones of the number of active processing units is within the target subrange of workload rate of the respective active processing units.

In an embodiment, the network controller further comprises: a target operation frequency determining unit, for determining for the respective processing unit the target operation frequency and the target subrange of workload rate corresponding to the target operation frequency.

In an embodiment, the application is associated with a performance goal, and the network controller further comprises: a workload rate demand determining module 760, for determining a workload rate demand of the application on the basis of the performance goal, the active processing units adjusting unit 740 being further communicatively connected to the workload rate demand determining module 760, for determining the number of active processing units based on the workload rate demand and the target subrange of workload rate of the respective processing units.

In an embodiment, the application is associated with a performance goal, and the network controller further comprises: a performance metrics obtaining module, for obtaining a performance metrics of the application and determining whether the performance goal is achieved based on the performance metrics; the operation frequency configuring module being communicatively connected to the performance metrics obtaining module, for further configuring, when the performance goal is not achieved, the respective active processing unit to operate at a respective subsequent operation frequency in such a way that the performance goal is achieved, wherein the subsequent operation frequency of the respective active processing unit is an operation frequency which is higher or lower than the target operation frequency selectable from the possible operation frequencies of the respective active processing unit.

In an embodiment, in case it is not possible to activate new processing unit(s), the active processing units adjusting unit is further configured to: configure the respective active processing unit to operate at another operation frequency, wherein the active processing unit achieves a highest energy efficiency when being operated at the other operation frequency to process a workload rate conforming to the workload corresponding to the application.

In an embodiment, the processing unit is any one of: a core; a processor comprising one or more cores; or a virtual instance.

According to the present invention, it is possible to keep as many as possible processing units operating at their respective preferred operation frequency to process a workload rate within the respective preferred subrange. Thus these processing units may achieve a peak energy efficiency. The energy efficiency of the network can be improved, while guaranteeing the performance goals of the application.

The solution in the present invention makes it possible to manage the resource provisioning of a cloud application to ensure performance and energy-efficient usage of processing units.

### Brief description of the figures

Fig. 1 depicts a schematic block diagram of a network according to an embodiment of the present invention;
Fig. 2 depicts a schematic energy efficiency of the processing unit 111 comprised in the network 100 when it is operated at each of the operation frequency;
Fig. 3 depicts a schematic flow diagram of a method according to one embodiment of the present invention;
Figs. 4a-4c each shows a schematic workload rate distribution according to an example of the present invention;
Fig. 5 depicts a schematic flow diagram of a method for determining a power consumption model of a processing unit;
Fig. 6 depicts a schematic flow diagram of a method according to another embodiment of the present invention;
Fig. 7 depicts a schematic block diagram of a network controller 700 according to one embodiment of the present invention;
Fig. 8 depicts a schematic topology of the system according to an example of the present invention.

Same or similar reference numerals refer to same or similar parts or components.

### Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps is not limited to the specific embodiments, and the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

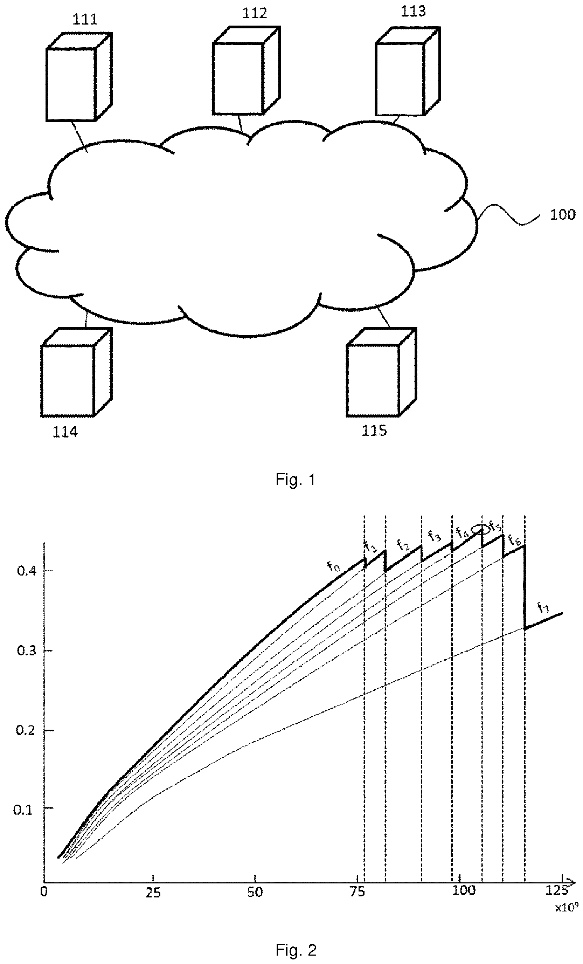

Fig. 1 shows a schematic block diagram of a network according to an embodiment of the present invention.

As shown in Fig. 1, the network 100 comprises a plurality of processing units 111, 112, 113, 114 and 115, each of which is operable at at least two discrete operation frequencies. The network 100 may comprise other processing units operable at only one operation frequency. The number of processing units is shown in Fig. 1 by way of example. The network 100 may comprise more or less processing units.

In the embodiment shown in Fig. 1, the processing unit may be a core, a processor comprising one or more cores, or a virtual instance. In one example, a processing unit comprises more than one core, and the cores comprised in the processing unit may simultaneously operate at the same operation frequency.

Fig. 2 schematically shows the energy efficiency of the processing unit 111 comprised in the network 100 when it is operated at each of the operation frequency.

In Fig. 2, the horizontal axis represents the workload rate in Giga (*10⁹) cycle per second, CPS. The vertical axis represents the energy efficiency of the processing unit in Watts per cycle per second, W/CPS.

In the example shown in Fig. 2, the processing unit 111 may be operated at eight discrete operation frequencies, namely f₀-f₇. Each thin solid curve represents the energy efficiency of the processing unit when operated at the respective operation frequency. The first thin solid curve from top overlaps with the thick solid line and represents the energy efficiency of the processing unit when operated at f₀. The second thin solid curve from top represents the energy efficiency of the processing unit when operated at f₁ and so on.

The thick solid line marking the envelop of the energy efficiency curves of all the possible operation frequencies shows the highest energy efficiency that can be achieved when the processing unit processes a workload rate within the respective subrange. The dashed lines help to show the respective subrange of workload rate.

It can be seen from the thick solid line marking the envelop of the energy efficiency curves that if the workload rate of the processing unit 111 is between 0 and 78 Giga CPS, the processing unit 111 has a higher energy efficiency when it is operated at f₀ than when it is operated at its other operation frequencies fᵣ-f₇. If the workload rate of the processing unit is between 78 and 82 Giga CPS, the processing unit 111 has a higher energy efficiency when it is operated at f₁ than when it is operated at its other operation frequencies f₂-f₇, since the processing unit 111 operating at f₀ cannot reach a workload rate higher than 78 Giga CPS, and so on. In Fig. 2, the subrange of workload rate is given by way of example.

The circle in the envelop curve marks the peak energy efficiency that can be achieved by the processing unit 111. Specifically, the processing unit 111 achieves the peak energy efficiency when being operated at f₄ to achieve a workload rate around 105 Giga CPS. The operation frequency f₄ which enables the peak energy efficiency is the target operation frequency of the processing unit 111. The subrange of workload rate, within which the processing unit 111 has highest energy efficiency when being operated at f₄, is approximately from 98 to105 Giga CPS, and this subrange is the target subrange of workload rate of the processing unit 111. In other words, the processing unit 111 has a higher energy efficiency when it is operated at its target operation frequency to process a workload rate within its target subrange of workload rate than when it is operated at its other operation frequency (frequencies) to process a workload rate within its target subrange of workload rate.

Generally, each of the operation frequency corresponds to a subrange of workload rate, within which that operation frequency is the most efficient one. Namely, when the processing unit 111 processes a workload rate within certain subrange, the processing unit 111 has higher energy efficiency when it is operated at the operation frequency corresponding to that subrange of workload rate than when it is operated at its other operation frequencies.

According to the characteristic of the energy efficiency curves, it can be concluded that it is energy efficient to operate the processing unit 111 according to the dick solid line in the Fig. 2. Furthermore, when the processing unit 111 is operated at the target operation frequency to process a workload rate within the target subrange of workload rate, the energy efficiency of the processing unit 111 is higher than that of the processing unit 111 when the processing unit 111 is operated at the another operation frequency to process a subrange of workload rate corresponding to the other operation frequency.

Using the example mentioned above, the energy efficiency of the processing unit 111 can be improved if the processing unit 111 is operated at f₄ to process a workload rate in range of 98 to 105 Giga CPS.

In the present invention, in order to reduce the power consumption of the processing units in the network, it is desired to operate as many processing units as possible at their respective target frequency to process a workload with in its target subrange of workload rate.

In the network 100, there may be a plurality type of processing units. The available operation frequencies for each type of processing unit may be different. Accordingly, the energy efficiency curve will also be different for each type of processing unit. In the following, the embodiment of the present invention will be described with respect to an example, where the active processing units on which application runs are operable with the same set of operation frequencies, and they have same subrange of workload rate corresponding to a same operation frequency.

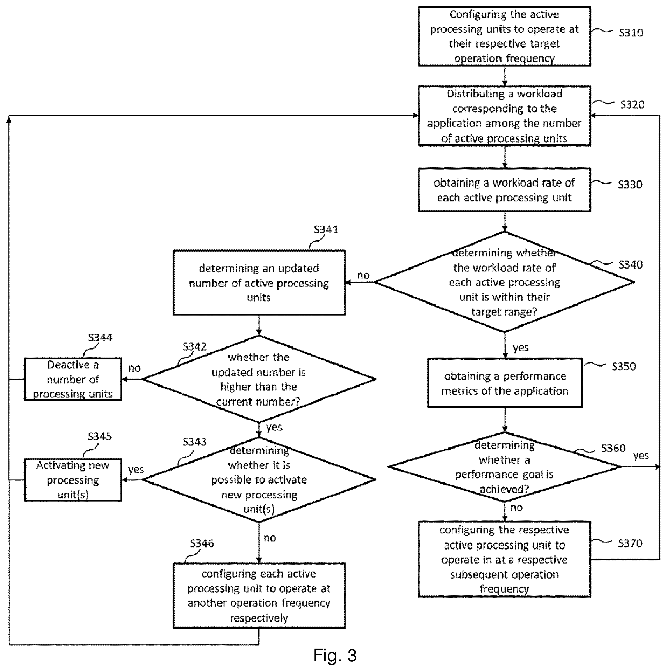

Fig. 3 shows a schematic flow diagram of a method according to one embodiment of the present invention. In one embodiment, the method may be implemented as software in a network controller.

In Step S310, the network controller configures a number of active processing units running the application to operate at their respective target operation frequency.

In step S320, the network controller obtains a workload rate for each of the number of active processing units.

In step S330, the network controller determines whether the workload rate of each active processing unit is within their respective target subrange.

In an example, the active processing units may of the same type. They may have the same target subrange of workload rate. The network controller may determine an aggregated workload rate of the active processing units, wherein the aggregated workload rate is an average value, for example, arithmetic mean, of the workload rate of all active processing units running the application. Then the network controller may compare the aggregated workload rate of the active processing units with the target subrange of workload rate and determine whether the aggregated workload rate is within the target subrange.

If it is determined in step S340 that the workload rate of each active processing unit is within their respective target subrange, the network controller proceeds the method with step S350 which will be described later. If it is determined in step S340 that the workload rate of each active processing unit is not within their respective target subrange, the network controller proceeds the method with adjusting the number of active processing units based on the workload rate and the target subrange of workload rate of the respective active processing units in steps S341-346. Specifically, the network controller determines in step S341 an updated number of active processing units, so that when the workload corresponding to the application is distributed among the updated number of active processing units, the workload rate of each active processing units is within their respective target subrange.

In step S342, the network controller determines whether the updated number of active processing units determined in S341 is higher than a current number of active processing units running the application.

If it is determined in step S342 that the updated number of active processing units determined in S341 is lower than a current number of active processing units running the application, the network controller deactivates in step S344 accordingly a number of processing units, so that the application runs on the updated number of processing units. Then the method proceeds with step S320.

If it is determined in step S342 that the updated number of active processing units determined in S341 is higher than a current number of active processing units running the application, the network controller further determines in step S343 whether it is possible to active new processing units. For example, the network controller may determine whether the application can be scaled out and/or whether there is (are) enough idle processing unit(s) available. An application cannot be "scaled out" if it is already deployed on the maximum possible number of processing units available at a certain time and increasing the number of processing units for running the particular application is not possible. If all the processing units in the network are already activated or the number of idle processing units is less than the number of new processing units required, then there is (are) not enough idle processing unit(s) to be activated.

If the network controller determines in step S343 that it is not possible to active new processing units, the network controller configures in step S346 each active processing unit to operate at another operation frequency, wherein the active processing unit achieves a highest energy efficiency when being operated at the other operation frequency to process a workload rate conforming to the workload corresponding to the application.

If the network controller determines in step S343 that it is possible to active new processing units, the network controller actives new processing unit(s) for the application in step S345. Then the method proceeds with step S320.

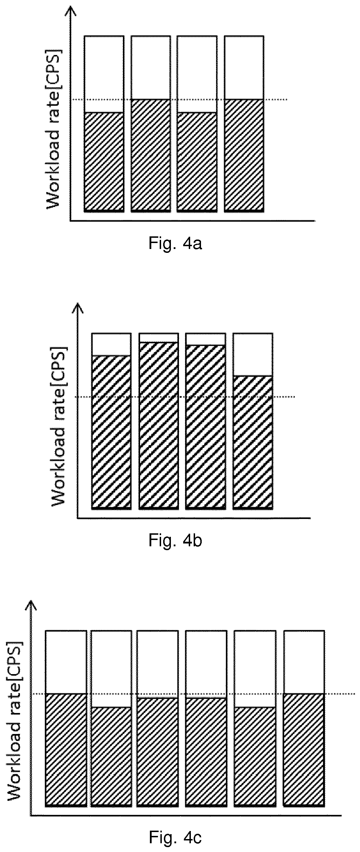

Figs. 4a-4c each shows a schematic workload rate distribution according to an example of the present invention.

In Fig. 4a, an application is deployed on four active processing units. Each rectangular in Fig. 4a represents an active processing unit, and the area within the rectangular marked with diagonal lines represents the workload rate of the respective active processing unit. In an example, the workload rate of each of the active processing units indicates usage information of the respective active processing unit. The horizontal dashed line represents a level within the target subrange of workload rate corresponding to each active processing units. In this example, the target subrange of workload rate corresponding to each active processing unit is the same.

In Fig. 4a, the workload rate of each active processing unit is substantially within the target subrange of workload rate.

If new workload corresponding to the application arrives, the workload rate distribution of Fig. 4a may change into Fig. 4b.

In Fig. 4b, the workload rate of each active processing unit is obviously above the target subrange of the respective processing unit. According to the present invention, the network controller will determine an updated number of processing units which is higher than the current number of processing units. The updated number of active processing units is determined in such a way that when the current workload of the application is distributed onto the updated number of active processing units, the workload rate of each of the updated number of active processing units is within the target subrange of workload rate of the respective active processing units. In this example, the updated number of processing units corresponding to the application is determined as six.

If it is possible to activate two new processing units according to the situation of the network and the character of the application, the network controller will activate two new processing units. Then the workload rate distribution of the application may change into Fig. 4c.

In Fig. 4c, the workload rate of each active processing unit comes back to the target subrange.

If the network controller determines in step S343 that it is not possible to active new processing units, the network controller configures the respective active processing unit running the application to operate at another frequency, wherein the active processing unit achieves a highest energy efficiency when being operated at the other operation frequency to process a workload rate conforming to the workload corresponding to the application.

In the example where the active processing units running the application are of the same type, the active processing units are currently operated at their target operation frequency, f₄ using the example shown in Fig. 2. Now the aggregated workload rate of the active processing units is for example 108 Giga CPS. All the processing units in the network are already active, thus there is no resource to activate new processing units to reduce the workload rate of each processing unit to the target subrange from 98 to 105 Giga CPS. In this case, the network controller according to the present invention will configure the active processing units to operate at f₅, since the processing units achieves a highest energy efficiency when being operated at f₅ to process a workload rate corresponding to the aggregated workload rate of the active processing units,108 Giga CPS. In another example, similarly, if the aggregated workload rate of the active processing units is 120 Giga CPS, and it is not possible to activate new processing units to reduce the workload rate of each processing units to the target subrange, the network controller according to the present invention will configure the processing units to operate at f₇, since the processing units achieves a highest energy efficiency when being operated at f₇ to process a workload rate corresponding to the aggregated workload rate of the active processing units,120 Giga CPS.

If it is determined in step S340 that the workload rate of each active processing unit is within their respective target subrange, the method proceeds with step S350, in which the network controller obtains a performance metrics of the application and determines in step S360 whether a performance goal associated with the application is achieved.

If the performance goal is achieved, the network controller configures the active processing units to further operate at its current operation frequency. The method proceeds with step S320.

If the performance goal is not achieved, the network controller configures in step S370 the respective active processing unit to operate at a respective subsequent operation frequency for a certain time period in such a way that the performance goal is achieved, wherein the subsequent operation frequency of the respective active processing unit is an operation frequency which is higher or lower than the current operation frequency selectable from the possible operation frequencies of the respective active processing unit. The current operation frequency is the operation frequency of the active processing unit at the time point when the performance metrics is obtained. Then the method steps S320-S370 will be repeated. After the certain time period, the operation frequency of the respective active processing unit may be set back to target operation frequency.

In one example, if the performance goal is not achieved because the performance metrics of the application is lower than expected, the operation frequency should be increased. In that case, the subsequent operation frequency f_{sub} of the respective active processing unit is an operation frequency higher than the current operation frequency f_{current} and is a next higher operation frequency selectable from the possible operation frequencies of the respective active processing unit. It means that there is no other operation frequency lower than the subsequent operation frequency and higher than the operation frequency at which said active processing unit is previously operated.
i.e: f_{current} < f_{sub}
and ∄ fₒₜₕₑᵣ satisfying: f_{current} < fₒₜₕₑᵣ < f_{sub}.

Using the example mentioned above with respect to Fig.1, the active processing units will be first operated at f₄. If the network controller determines that even if the workload rate of each active processing unit is within their target subrange from 98 to 105 Giga CPS, the performance goal of the application still cannot be met, it will increase the operation frequency of the active processing units to next possible operation frequency that is higher than the current operation frequency. Namely the network controller first increases the operation frequency of the active processing units from f₄ to f₅, because f₅ is the most efficient operation frequency besides f₄ for a workload rate within the target subrange. And then the method steps S320-S370 will be repeated. If the performance goal still cannot be met, then the network controller will increase the operation frequency from f₅ to f₆, and so on, until the performance goal can be met.

In one embodiment, prior to step S310, the network controller needs to determine for the respective processing unit the target operation frequency and the target subrange of workload rate corresponding to the target operation frequency.

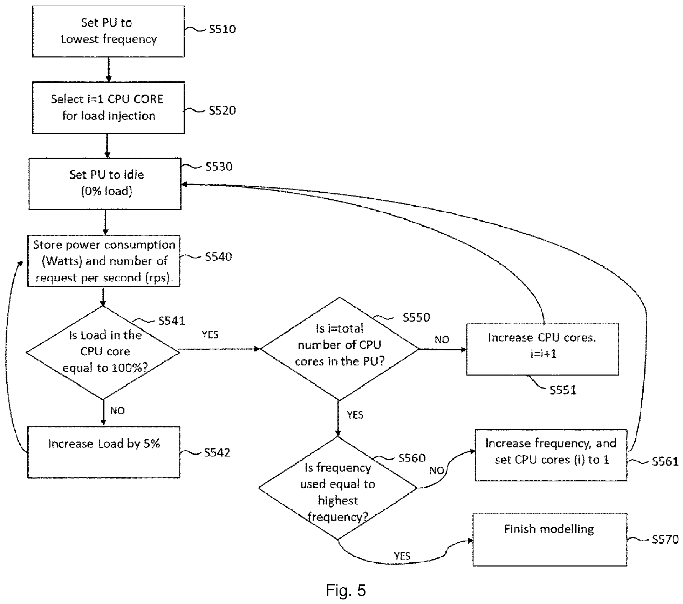

Fig. 5 shows a schematic flow diagram of a method for determining a power consumption model of a processing unit. In one example, the method may be implemented as software in a modelling module integrated in the network controller or as an independent module. In the example shown in Fig. 5, the processing unit may be a processor comprising more than one CPU cores.

In step S510, the processing unit is set to operate at the lowest operation frequency. In step S520, one CPU core is selected for load injection, with i=1 representing the number of the active core. In step S530, the processing unit is injected with 0% load, namely the processing unit is set to idle. The injection may have a duration of seconds or minutes.

In step S540, the power consumption of the processing unit and the workload rate will be stored. In step S541, it is determined whether the load in the CPU core equals 100%. If not, then in step S542 the load for injection is increased by 5%. Then the method proceeds with step S540.

If it is determined in step S541 that the load in the CPU core equals 100%, it will be further determined in step S550 whether the number of the active cores i equals the total number of CPU cores comprised in the processing unit.

If the number of the active cores i is still lower than the total number of CPU cores comprised in the processing unit, the number of active cores i will be increased by 1 in step S551, i=i+1. Then the method proceeds with step S530.

If it is determined in step S550 that the number of the active cores i is bigger than the total number of CPU cores comprised in the processing unit, it will be further determined in step S560 whether the current operation frequency equals to the highest operation frequency. If not, the operation frequency will be increased to the next higher operation frequency of the processing unit, and the number of active cores i will be set back to 1.

If it is determined in step S560 that the current operation frequency equals to the highest operation frequency, the modelling procedure is finished in step S570.

The method of modeling the processing unit is not limited to the given example. In another example, the operation frequencies may be tested in a decreasing sequence, and the number active cores may also be set to the total number of cores at the beginning and be reduced during the modeling procedure to have all the cores tested.

Using the method of modeling described above, a model that describes the power consumption of the processing unit as well as the efficiency of its frequencies with respect to the workload rate is obtained. From the obtained model, it is possible to determine for the modeled processing unit the subrange of workload rate respectively for its respective operation frequency and to determine for the modeled processing unit the target operation frequency and the target subrange of workload rate.

In another example, the processing unit is a core. In that case, it is necessary to perform a similar but simplified procedure as described above in Fig. 5 for the processing unit. For simplicity, it will not be described here.

In another embodiment, when the network needs to process a new application, during initialization, the network controller needs to determine how many processing units shall be activated to run the new application.

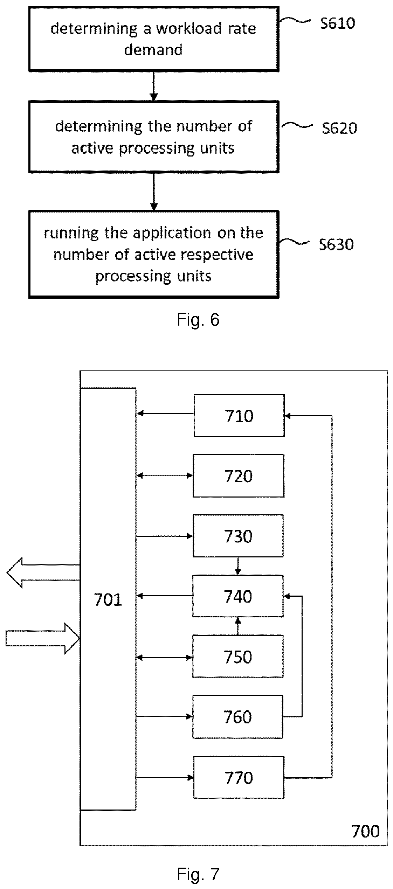

Fig. 6 shows a schematic flow diagram of a method according to another embodiment of the present invention.

In step S610, the network controller determines a workload rate demand of the application on the basis of the performance goal associated with the new application.

In step S620, the network controller determines the number of active processing units that shall be activated to run the new application based on the workload rate demand and the target subrange of workload rate of the respective processing units.

In step S630, the network controller runs the application on the number of active respective processing units by activating the number of active processing units, configuring the number of active processing units to operate at their respective target operation frequency, and distributing a workload corresponding to the application among the number of active processing units in such a way that the workload rate of the respective active processing unit is within its target subrange.

According to another aspect of the invention, there is provided a network controller. Fig. 7 shows a schematic block diagram of a network controller 700 according to one embodiment of the present invention.

The network controller 700 comprises an interface module 701, an operation frequency configuring module 710, a workload distributing module 720, a workload rate obtaining module 730, an active processing units adjusting unit 740, a target operation frequency determining unit 750, a workload rate demand determining module 760 and a performance metrics obtaining module 770.

The network controller 700 being communicatively connected to a plurality of processing units comprised in the network. The network controller 700 exchanges messages with the plurality of processing units via the interface module 701. A plurality of processing units connected to the network controller 700 are operable at discrete operation frequencies.

The operation frequency configuring module 710 is communicatively connected to the interface module 701, for configuring a number of active processing units running an application to operate at their respective target operation frequency.

The workload distributing module 720 is communicatively connected to the interface module 701. It is configured to distribute a workload corresponding to the application among the number of active processing units in such a way that the workload rate of the respective active processing unit is within its target subrange.

The workload rate obtaining module 730 is communicatively connected to the interface module 701. It is configured to obtain a workload rate for each of the number of active processing units from the processing units via the interface module 701.

The active processing units adjusting unit 740 is communicatively connected to the interface module 701, the workload rate obtaining module 730 and optionally the target operation frequency determining unit 750. It is configured to adjust the number of active processing units based on the workload rate and the target subrange of workload rate of the respective active processing units, so that the workload rate of respective ones of the number of active processing units is within the target subrange of workload rate of the respective active processing units. The target subrange of workload rate of the respective active processing units may be obtained from the interface module 701 and/or the target operation frequency determining unit 750.

The target operation frequency determining unit 750 is communicatively connected to the interface module 701. It is configured to determine the target operation frequency for the respective processing unit and the target subrange of workload rate corresponding to the target operation frequency.

The workload rate demand determining module 760 is communicatively connected to the interface module 701 and the active processing units adjusting unit 740. It is configured to determine a workload rate demand of the application on the basis of the performance goal, when the network needs to process a new application. The performance goal may be obtained from the interface module 701.

The active processing units adjusting unit 740 being further configured to determine the number of active processing units based on the workload rate demand and the target subrange of workload rate of the respective processing units.

The performance metrics obtaining module 770 is communicatively connected to the interface module 701 and the operation frequency configuring module 710. It is configured to obtain a performance metrics of the application and to determine whether the performance goal is achieved based on the performance metrics. Similarly, the performance goal may be obtained from the interface module 701.

The operation frequency configuring module 710 is communicatively connected to the performance metrics obtaining module 770 for further configuring, when the performance goal is not achieved, the respective active processing unit to operate at a respective subsequent operation frequency in such a way that the performance goal is achieved, wherein the subsequent operation frequency of the respective active processing unit is an operation frequency which is higher or lower than the target operation frequency selectable from the possible operation frequencies of the respective active processing unit.

In case it is not possible for the active processing units adjusting unit 740 to activate new processing unit(s), the active processing units adjusting unit 740 is further configured to configure the respective active processing unit to operate at another operation frequency, wherein the active processing unit achieves a highest energy efficiency when being operated at the other operation frequency to process a workload rate conforming to the workload corresponding to the application.

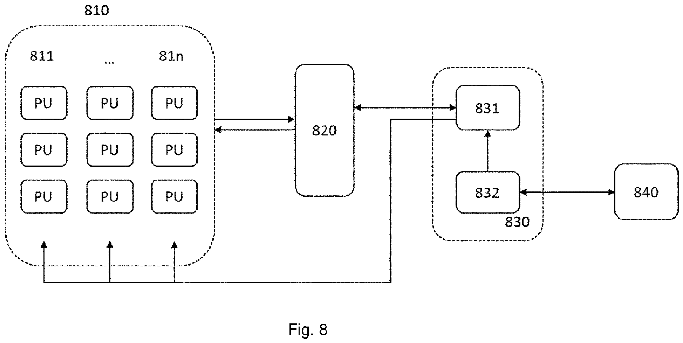

Fig. 8 shows a schematic topology of the system according to an example of the present invention.

The system comprises a datacenter 810, a cloud manager 820, a network controller 830 and, as an option, a processing unit to be modeled 840, the processing unit 840 being representative of a processing unit 811-81n when its power consumption model is determined according to fig. 5.

The datacenter 810 comprises a plurality of processing units, 811 to 81n, with n representing the number of processing units comprised in the datacenter 810.

The datacenter 810 is connected to a cloud manager 820. The cloud manager 820 obtains workload rate metrics, system metrics, and performance metrics from the datacenter 810. The cloud manager 820 may also monitor the operation frequency of the processing units comprised in the datacenter 810 and instruct the datacenter to activate and utilize an appropriate number of processing units. The communication between the cloud manager 820 and the datacenter 810 can be carried out using known interface, which will not be elaborated here.

The cloud manager 820 is communicatively connected with a network controller 830 according to the present invention. In another example, the network controller 830 may be implemented together with the cloud manager 820.

The network controller 830 comprises a controller module 831 and a modelling module 832.

The controller module 831 obtains workload rate metrics, performance metrics from the cloud manager 820. Besides, the controller module 831 may consult the cloud manager 820, at which processing unit each application runs. The controller module 831 is able to configure the operation frequency of the processing units comprised in the datacenter 810. The controller module 831 is configured to perform the method according to the present invention.

The modelling module 832 is configured to model each type of processing unit available in the datacenter 810, so as to determine for the respective processing unit the target operation frequency and the target subrange of workload rate. The controller module 831 obtains the above mentioned information from the modelling module 832.

In one embodiment, the modelling module 832 performs the method described above with respect to Fig. 5.

## Claims

1. A method of reducing energy consumption in a network of processing units, among which a plurality of processing units are operable at discrete operation frequencies,
wherein the respective processing unit achieves a peak energy efficiency when being operated at a target operation frequency to process a certain workload rate, the target operation frequency corresponding to a target subrange of workload rate, wherein the respective processing unit has a higher energy efficiency when it is operated at its respective target operation frequency to process a workload rate within its respective target subrange of workload rate than when it is operated at its other operation frequency (frequencies) to process a workload rate within its respective target subrange of workload rate; the network being configured to run an application;
the method comprising:
- configuring a number of active processing units running the application to operate at their respective target operation frequency;
- distributing a workload corresponding to the application among the number of active processing units in such a way that the workload rate of the respective active processing unit is within its target subrange.

2. The method according to claim 1, further comprising:
- obtaining a workload rate for respective ones of the number of active processing units;
- adjusting the number of active processing units based on the workload rate and the target subrange of workload rate of the respective active processing units, so that the workload rate of respective ones of the number of active processing units is within the target subrange of workload rate of the respective active processing units.

3. The method according to claim 1, further comprising:
- determining for the respective processing unit the target operation frequency and the target subrange of workload rate corresponding to the target operation frequency.

4. The method according to claim 1, the application being associated with a performance goal, the method further comprising:
- determining a workload rate demand of the application on the basis of the performance goal,
- determining the number of active processing units based on the workload rate demand and the target subrange of workload rate of the respective processing units;
- running the application on the number of active processing units.

5. The method according to claim 1, the application being associated with a performance goal, the method further comprising:
- obtaining a performance metrics of the application and determining whether the performance goal is achieved based on the performance metrics;
- configuring, when the performance goal is not achieved, the respective active processing unit to operate at a respective subsequent operation frequency in such a way that the performance goal is achieved.

6. The method according to claim 2, the step of adjusting the number of active processing units further comprising:
- activating new processing unit(s) for the application; or
- deactivating a number of processing unit running the application.

7. The method according to claim 2, in case it is not possible to activate new processing unit(s), the method further comprising:
- configuring the respective active processing unit to operate at another operation frequency, wherein the active processing unit achieves a highest energy efficiency when being operated at the other operation frequency to process a workload rate conforming to the workload corresponding to the application.

8. The method according to claim 1, wherein the processing unit is any one of:
- a core;
- a processor comprising one or more cores; or
- a virtual instance.

9. A network controller (700) in a network, the network controller (700) being communicatively connected to a plurality of processing units comprised in the network, among which a plurality of processing units are operable at discrete operation frequencies,
wherein the respective processing unit achieves a peak energy efficiency when being operated at a target operation frequency to process a certain workload rate, the target operation frequency corresponding to a target subrange of workload rate, wherein the respective processing unit has a higher energy efficiency when it is operated at its respective target operation frequency to process a workload rate within its respective target subrange of workload rate than when it is operated at its other operation frequency (frequencies) to process a workload rate within its respective target subrange of workload rate; the network being configured to run an application;
the network controller (700) comprising:
an operation frequency configuring module (710), for configuring a number of active processing units running the application to operate at their respective target operation frequency;
a workload distributing module (720), for distributing a workload corresponding to the application among the number of active processing units in such a way that the workload rate of the respective active processing unit is within its target subrange.

10. The network controller (700) according to claim 9, further comprising:
a workload rate obtaining module (730), for obtaining a workload rate for respective ones of the number of active processing units;
an active processing units adjusting unit (740), communicatively connected to the workload rate obtaining module (730), for adjusting the number of active processing units based on the workload rate and the target subrange of workload rate of the respective active processing units, so that the workload rate of respective ones of the number of active processing units is within the target subrange of workload rate of the respective active processing units.

11. The network controller (700) according to claim 9, further comprising:
a target operation frequency determining unit (750), for determining for the respective processing unit the target operation frequency and the target subrange of workload rate corresponding to the target operation frequency.

12. The network controller (700) according to claim 9, the application being associated with a performance goal, the network controller (700) further comprising:
a workload rate demand determining module (760), for determining a workload rate demand of the application on the basis of the performance goal,
the active processing units adjusting unit (740) being further communicatively connected to the workload rate demand determining module (760), for determining the number of active processing units based on the workload rate demand and the target subrange of workload rate of the respective processing units.

13. The network controller (700) according to claim 9, the application being associated with a performance goal, the network controller (700) further comprising:
a performance metrics obtaining module (770), for obtaining a performance metrics of the application and determining whether the performance goal is achieved based on the performance metrics;
the operation frequency configuring module (710) being communicatively connected to the performance metrics obtaining module (770) for further configuring, when the performance goal is not achieved, the respective active processing unit to operate at a respective subsequent operation frequency in such a way that the performance goal is achieved, wherein the subsequent operation frequency of the respective active processing unit is an operation frequency which is higher or lower than the target operation frequency selectable from the possible operation frequencies of the respective active processing unit.

14. The network controller (700) according to claim 10, in case it is not possible to activate new processing unit(s), the active processing units adjusting unit (740) being further configured to:
- configure the respective active processing unit to operate at another operation frequency, wherein the active processing unit achieves a highest energy efficiency when being operated at the other operation frequency to process a workload rate conforming to the workload corresponding to the application.

15. The network controller (700) according to claim 9, wherein the processing unit is any one of:
- a core;
- a processor comprising one or more cores; or
- a virtual instance.
